# EUROPEAN PATENT SPECIFICATION

(11) **EP 3 098 521 B1**
(45) Date of publication and mention of the grant of the patent: **01.08.2018**
(21) Application number: 16170654.4
(22) Date of filing: 20.05.2016
(51) Int. Cl.: F24D 3/10, F24D 19/10

(54) **FLUID-TYPE TEMPERATURE-REGULATING UNIT**
FLUID-TYPE TEMPERATURREGULIERENDE VORRICHTUNG
FLUIDE-TYPE UNITÉ DE RÉGULATION DE TEMPÉRATURE

(30) Priority: 22.05.2015 JP 2015104964
(43) Date of publication of application: 30.11.2016
(73) Proprietor: DAIKIN INDUSTRIES, LIMITED, Osaka-shi Osaka 530 (JP); Daikin Europe N.V., 8400 Oostende (BE)
(72) Inventor: CHIKAMI, Hideo, 8400 Oostende (BE); DEBAETS, Stefanie, 8400 Oostende (BE)
(74) Representative: Global IP Europe Patentanwaltskanzlei

(56) References cited:
- EP-A1- 2 413 042
- US-A1- 2013 048 114

## Description

### TECHNICAL FIELD

The present invention relates to a fluid-type temperature-regulating unit.

### BACKGROUND ART

Patent Document 1 (International Publication Gazette WO 2011/129248) discloses a heat-pump-type hot-water supply system that uses a fluid-type temperature-regulating unit. The system is provided with a plurality of temperature regulating devices, such as a radiator or a floor-warming apparatus. As used herein, the term "temperature-regulating device" refers to a device for regulating the temperature of indoor air, home-building materials, and various other objectives.

In this system, a plurality of temperature-regulating devices is connected to the same fluid circuit and is supplied with hot-heat from the fluid flowing therethrough. There are two types of configurations of such a fluid circuit: an open circuit in which the fluid is open to atmosphere, and a closed circuit in which the fluid is not open to atmosphere.

EP 2 413 042 A1 discloses a fluid-type temperature-regulating unit comprising: a heat exchanger configured to impart cold-heat or hot-heat from a refrigerant to a fluid; a first feed port configured to feed the fluid to a first temperature-regulating device; a first feed channel connecting the heat exchanger and the first feed port; a first recovery port configured to recover the fluid from the first temperature-regulating device; a first recovery channel connecting the heat exchanger and the first recovery port; a first pump provided to the first feed channel or the first recovery channel and configured to draw in the fluid from a first intake port and discharge the fluid from a first discharge port; an expansion tank provided to the first feed channel or the first recovery channel; a second feed port configured to feed the fluid to a second temperature-regulating device; a second feed channel connecting the heat-exchanger and the second feed port; a second recovery port configured to recover the fluid from the second temperature-regulating device; a second recovery channel connecting the heat-exchanger and the second recovery port; and a communication tube configured to direct a portion of the fluid flowing through the second feed channel or the second recovery channel to the expansion tank, wherein the expansion tank is provided so as to be in communication with the first intake port.

US 2013/048114 A1 discloses a hydronic distribution system including a plurality of temperature-regulating devices which are arranged in parallel and two pumps which are arranged in parallel to be used for all the temperature-regulating devices.

### SUMMARY OF THE INVENTION

### <Technical Problem>

When the temperature of a fluid increases, the volume of the fluid expands. When the fluid circuit is configured as a closed circuit, the expansion of the fluid may damage conduits and/or other elements. For this reason, a closed-type expansion tank is sometimes provided to the fluid circuit in order to absorb the increased volume of the fluid.

When a plurality of temperature-regulating devices is used, the fluid-type temperature regulating unit needs to have a plurality of conduit systems for exchanging the fluid with the temperature regulating devises. However, a configuration with as many expansion tanks as the conduit systems requires considerable space and increases costs.

An object of the present invention is to implement a low-cost mechanism that absorbs the increased volume of fluid in a fluid-type temperature-regulating unit for supplying hot-heat or cold-heat to a plurality of temperature-regulating devices.

### <Solution to Problem>

A fluid-type temperature-regulating unit according to a first aspect of the present invention is provided with a heat exchanger, a first feed port, a first feed channel, a first recovery port, a first recovery channel, a first pump, an expansion tank, a second feed port, a second feed channel, a second recovery port, a second recovery channel, a second pump, and a communication tube. The heat exchanger imparts cold-heat or hot-heat from a refrigerant to a fluid. The first feed port feeds the fluid to a first temperature-regulating device. The first feed channel connects the heat exchanger and the first feed port. The first recovery port recovers the fluid from the first temperature-regulating device. The first recovery channel connects the heat exchanger and the first recovery port. The first pump is provided to the first feed channel or the first recovery channel and draws in the fluid from a first intake port and discharges the fluid from a first discharge port. The expansion tank is provided to the first feed channel or the first recovery channel. The second feed port feeds the fluid to a second temperature-regulating device. The second feed channel connects the heat exchanger and the second feed port. The second recovery port recovers the fluid from the second temperature-regulating device. The second recovery channel connects the heat exchanger and the second recovery port. The second pump is provided to the second feed channel or the second recovery channel and draws in the fluid from a second intake port and discharges the fluid from a second discharge port. The communication tube directs a portion of the fluid flowing through the second feed channel or the second recovery channel to the expansion tank. The communication tube induces greater pressure loss than any of the first feed channel, the first recovery channel, the second feed channel, and the second recovery channel.

With such a configuration, the communication tube is in communication with the expansion tank and either one of the second feed channel or the second recovery channel. Therefore, the volume increase of the fluid can be moved to the expansion tank by way of the communication tube when the fluid flowing through a conduit connected to the second temperature-regulating device expands. A mechanism for accommodating the increase in volume of the fluid in the conduit in communication with the second temperature-regulating device can be configured at low cost with a communication tube.

In the fluid-type temperature-regulating unit according to the first aspect, the expansion tank is provided so as to be in communication with the first intake port.

With such a configuration, the expansion tank is provided at a location in communication with the first intake port. Therefore, in contrast to a configuration in which the expansion tank is in communication with the first discharge port, the fluid discharged from the first pump can be restrained from being directly sent to the expansion tank.

In the fluid-type temperature-regulating unit according to the first aspect, the communication tube connects a first-intake-port side and a second-intake-port side. The first-intake-port side belongs to a channel which is either one of the first feed channel or the first recovery channel and to which the first pump is provided. The second-intake-port side belongs to another channel which is either one of the second feed channel or the second recovering channel and to which the second pump is provided.

With such a configuration, the communication tube connects the conduit in communication with the first intake port and the conduit in communication with the second intake port. Therefore, the volume increase of the fluid that flows through the second feed channel or the second recovery channel can move, via the communication tube, to the expansion tank, which is in communication with the first intake port.

A fluid-type temperature-regulating unit according to a second aspect of the present invention is the fluid-type temperature-regulating unit according to the first aspect, wherein the communication tube has a smaller cross-sectional area than the first feed channel, the first recovery channel, the second feed channel, and the second recovery channel.

With such a configuration, the communication tube has a small cross-sectional area. Therefore, the high pressure loss to be induced by the communication tube is implemented with the small cross-sectional area.

A fluid-type temperature-regulating unit according to a third aspect of the present invention is the fluid-type temperature-regulating unit according to the first or second aspect, wherein the first pump is provided to the first recovery channel, the expansion tank is provided to the first recovery channel, and the second pump is provided to the second recovery channel.

With such a configuration, the expansion tank and the communication tube are provided to the recovery-tube side for returning the fluid from a temperature-regulating device to the heat exchanger. The fluids mixed by the presence of the communication tube are fluids each recovered from the first temperature regulating device and the second temperature regulating device, the hot-heat or cold-heat carried by which has already been exploited. Therefore, the performance of the fluid-type temperature-regulating unit is less liable to be reduced.

A fluid-type temperature-regulating unit according to a fourth aspect of the present invention is the fluid-type temperature-regulating unit according to any one of the first to third aspects, wherein the communication tube connects the expansion tank and the second-intake-port side. The second-intake-port side belongs to a channel which is either one of the second feed channel or the second recovery channel and to which the second pump is provided.

With such a configuration, the communication tube directly connects the conduit in communication with the second intake port to the expansion tank. Therefore, the volume increase of the fluid that flows through the second feed channel or the second recovery channel can pass and move, via the communication tube, directly to the expansion tank.

A fluid-type temperature-regulating unit according to a fifth aspect of the present invention is the fluid-type temperature-regulating unit according to any one of the first to fourth aspects, further comprising a relief valve that is in communication with the expansion tank. The relief valve releases the fluid when the pressure of the fluid flowing through a channel which is either one of the first feed channel or the first recovery channel and to which the expansion tank is provided exceeds a predetermined threshold value.

With such a configuration, a relief valve in communication with the expansion tank is provided. Therefore, the relief valve expels the fluid to the exterior of the fluid circuit and thereby restrains damage to the conduits of the fluid circuit in the case of abnormal situation, such as when the expansion tank is full.

A fluid-type temperature-regulating unit according to a sixth aspect of the present invention is the fluid-type temperature-regulating unit according to any one of the first to fifth aspects, further comprising a mixing three-way valve. The mixing three-way valve is provided to the second feed channel and configured to send to the second feed port a mixture of a portion of the fluid heading from the heat exchanger toward the first feed port and the fluid discharged from the second discharge port.

With such a configuration, the fluid fed from the second feed port is a mixture of the fluid endowed with cold-heat or hot-heat from the refrigerant in the heat exchanger and the fluid from which cold-heat or hot-heat has been taken in the second temperature-regulating device. Therefore, the temperature of the fluid fed to the second temperature-regulating device can be set so as to be different from the temperature of the fluid fed to the first temperature-regulating device.

A fluid-type temperature-regulating unit according to a seventh aspect of the present invention is the fluid-type temperature-regulating unit according to any one of the first to sixth aspects, further comprising a third feed port, a third feed channel, a third recovery port, a third recovery channel, and a third pump. The third feed port feeds the fluid to a third temperature-regulating device. The third feed channel connects the heat exchanger and the third feed port. The third recovery port recovers the refrigerant from the third temperature-regulating device. The third recovery channel connects the heat exchanger and the third recovery port. The third pump is provided to the third feed channel or the third recovery channel and draws in the fluid from a third intake port and discharges the fluid from a third discharge port. The communication tube directs a portion of the fluid flowing through the third feed channel or the third recovery channel to the expansion tank.

With such a configuration, the fluid-type temperature-regulating unit has three conduit systems. Therefore, the temperature of three temperature-regulating devices can be individually controlled.

### <Effects of Invention>

In accordance with the fluid-type temperature-regulating unit according to the first aspect of the present invention, a mechanism for accommodating an increase in volume of the fluid in the conduit in communication with the second temperature-regulating device can be configured at low cost, the fluid discharged from the first pump can be prevented from being directly sent to the expansion tank, and the increased volume of the fluid can move to the expansion tank by way of the communication tube.

In accordance with the fluid-type temperature-regulating unit according to the second aspect of the present invention, a greater pressure loss to be induced by the communication tube is achieved with a small cross-sectional area.

The performance of the fluid-type temperature-regulating unit according to the third aspect of the present invention is less liable to be reduced.

In accordance with the fluid-type temperature-regulating unit according to the fourth aspect of the present invention, the increased volume of the fluid can move to the expansion tank by way of the communication tube.

In accordance with the fluid-type temperature-regulating unit according to the fifth aspect of the present invention, damage to the conduits of the fluid circuit can be prevented.

In accordance with the fluid-type temperature-regulating unit according to the sixth aspect of the present invention, the temperature of the fluid that flows to the second temperature-regulating device can be set so as to be different from the temperature of the fluid fed to the first temperature-regulating device.

In accordance with the fluid-type temperature-regulating unit according to the seventh aspect of the present invention, the temperature of three temperature-regulating devices can be individually controlled.

### BRIEF DESCRIPTION OF THE DRAWINGS

FIG. 1 is an overview of the environment-regulating system 100;
FIG. 2 is a fluid circuit diagram of the fluid-type temperature-regulating unit 10 according to a first embodiment of the present invention;
FIG. 3 is a block diagram of the controller 200 of the fluid-type temperature-regulating unit 10;
FIG. 4 is a fluid circuit diagram of the fluid-type temperature-regulating unit 10A according to a second embodiment of the present invention;
FIG. 5 is a fluid circuit diagram of the fluid-type temperature-regulating unit 10B according to a third embodiment of the present invention; and
FIG. 6 is a fluid circuit diagram of the fluid-type temperature-regulating unit 10C according to a fourth embodiment of the present invention;

### DESCRIPTION OF EMBODIMENTS

### <First embodiment

### (1) Overall configuration

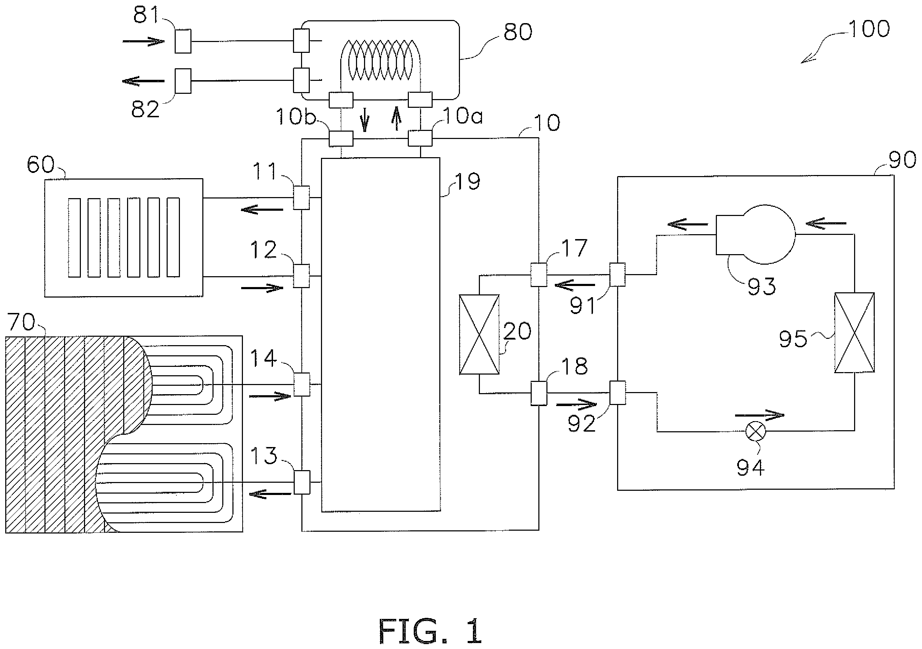

FIG. 1 shows an environment-regulating system 100 configured using the fluid-type temperature-regulating unit 10 according to a first embodiment of the present invention. The environment-regulating system 100 is provided with a first temperature-regulating device 60, a second temperature-regulating device 70, and a hot-water apparatus 80, for making the living environment of a user comfortable. The environment-regulating system 100 is furthermore provided with a fluid-type temperature-regulating unit 10 for circulating fluid such as water or brine, and a refrigerant circuit unit 90 for providing hot-heat to the fluid.

### (2) Detailed configuration

The components of the environment-regulating system 100 will be described with reference to FIG. 1.

### (2-1) First temperature-regulating device 60

The first temperature-regulating device 60 is a radiator. The first temperature-regulating device 60 receives a heated fluid from the fluid-type temperature-regulating unit 10, warms the indoor air of the user's house, and sends the cooled fluid back to the fluid-type temperature-regulating unit 10.

### (2-2) Second temperature-regulating device 70

The second temperature-regulating device 70 is a floor-warming apparatus. The second temperature-regulating device 70 receives heated fluid from the fluid-type temperature-regulating unit 10, warms the floor of the user's house, and sends the cooled fluid back to the fluid-type temperature-regulating unit 10.

### (2-3) Hot-water apparatus 80

The hot-water apparatus 80 receives heated fluid from the fluid-type temperature-regulating unit 10, and heats tap water that enters from a tap water inlet 81 using the heat of the heated fluid to produce hot water, and expels the hot water from a hot-water port 82. The cooled fluid is sent back to the fluid-type temperature-regulating unit 10.

The user of the environment-regulating system 100 selects either the mode for actuating the hot-water apparatus 80 or the mode for actuating the first temperature-regulating device 60 and the second temperature-regulating device 70.

### (2-4) Refrigerant circuit unit 90

The refrigerant circuit unit 90 generates hot-heat using a refrigerant, and transmits the hot-heat to the fluid-type temperature-regulating unit 10. A refrigerant outlet port 91 and a refrigerant inlet port 92 are provided to the refrigerant circuit unit 90. The refrigerant circuit unit 90 furthermore has a compressor 93, a decompressor 94, and an air-refrigerant heat exchanger 95 that functions as an evaporator. High-pressure liquid refrigerant that has entered from the refrigerant inlet port 92 is decompressed by the decompressor 94 to become low-pressure gas-liquid two-phase refrigerant. The low-pressure gas-liquid two-phase refrigerant receives heat from the air-refrigerant heat exchanger 95 and is evaporated to become a low-pressure gas refrigerant. The low-pressure gas refrigerant is compressed by the compressor 93 to become high-pressure gas refrigerant, which departs from the refrigerant outlet port 91.

### (2-5) Fluid-type temperature-regulating unit 10

The fluid-type temperature-regulating unit 10 heats the fluid using high-temperature refrigerant. The fluid-type temperature-regulating unit 10 has a heat exchanger 20 and a fluid circuit 19 which is a closed circuit.

The heat exchanger 20 functions as a refrigerant condenser. The heat exchanger 20 transmits heat from the high-pressure gas refrigerant received from the refrigerant inlet port 17 to the fluid circulating through the fluid circuit 19. The high-pressure gas refrigerant loses heat and is condensed in this process, and departs from the refrigerant outlet port 18 as high-pressure liquid refrigerant.

The fluid circuit 19 heats the fluid by the operation of the heat exchanger 20, and controls the temperatures of the fluids sent to the first temperature-regulating device 60, the second temperature-regulating device 70, and the hot-water apparatus 80.

### (3) Detailed configuration of the fluid-type temperature-regulating unit 10

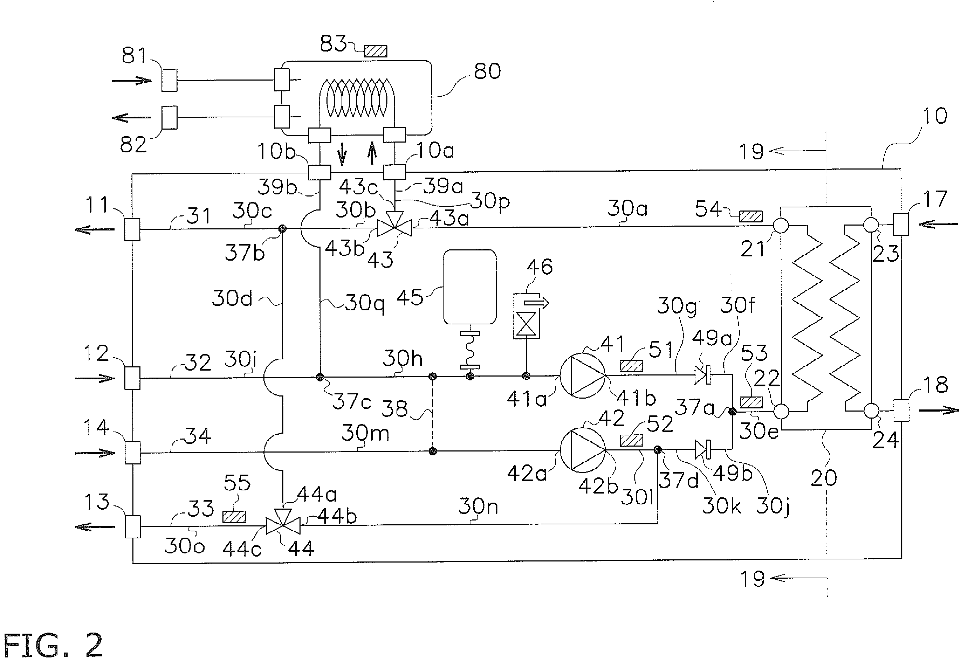

FIG. 2 shows the circuit of the fluid-type temperature-regulating unit 10. The interface with the exterior in the fluid-type temperature-regulating unit 10 includes a first feed port 11, a first recovery port 12, a second feed port 13, a second recovery port 14, a refrigerant inlet port 17, a refrigerant outlet port 18, a hot-water apparatus feed port 10a, and a hot-water apparatus recovery port 10b. Each of these ports is provided with an unillustrated valve for opening and closing.

The constituent elements of the fluid-type temperature-regulating unit 10 are described below.

### (3-1) Heat exchanger 20

The heat exchanger 20 is a plate heat exchanger for exchanging heat between a refrigerant and a fluid, and functions as a condenser as previously noted. A fluid inlet 22, a fluid outlet 21, a refrigerant inlet 23, and a refrigerant outlet 24 are provided to the heat exchanger 20. The refrigerant enters from the refrigerant inlet 23 and exits from the refrigerant outlet 24. The fluid enters from the fluid inlet 22 and exits from the fluid outlet 21. The fluid is heated by the heat of the refrigerant while the refrigerant and the fluid pass through the heat exchanger 20.

### (3-2) First conduit system

A first conduit system for controlling the temperature of the first temperature-regulating device 60 includes a first feed channel 31 and a first recovery channel 32.

### (3-2-1) First feed channel 31

The first feed channel 31 is a pathway for feeding heated fluid to the first temperature-regulating device 60. The first feed channel 31 extends from the fluid outlet 21, continues via a conduit 30a, a hot-water three-way valve 43, a conduit 30b, a heated-fluid branching point 37b, and a conduit 30c, and arrives at the first feed port 11.

When the mode for actuating the first temperature-regulating device 60 and the second temperature-regulating device 70 is selected, the hot-water three-way valve 43 places a first port 43a and a second port 43b in communication with each other and disjoins a third port 43c.

### (3-2-2) First recovery channel 32

The first recovery channel 32 is a pathway for recovering cooled fluid released from the first temperature-regulating device 60. The first recovery channel 32 extends from the first recovery port 12, continues via a conduit 30i, a hot-water branching point 37c, a conduit 30h, a first pump 41, a conduit 30g, a first check valve 49a, a conduit 30f, a fluid merge point 37a, and a conduit 30e, and arrives at the fluid inlet 22.

The first pump 41 has an inverter and is capable of varying flow rate by control.

### (3-3) Second conduit system

A second conduit system for controlling the temperature of the second temperature-regulating device 70 includes a second feed channel 33 and a second recovery channel 34.

### (3-3-1) Second feed channel 33

The second feed channel 33 is a pathway for feeding heated fluid to the second temperature-regulating device 70. The second feed channel 33 extends from a fluid outlet 21, continues via the conduit 30a, the hot-water three-way valve 43, the conduit 30b, the heated-fluid branching point 37b, a conduit 30d, the mixing three-way valve 44, and a conduit 30o, and arrives at the second feed port 13.

In other words, the second feed channel 33 shares a portion of the components with the first feed channel 31.

The conduit 30d extending from the heated-fluid branching point 37b of the first feed channel 31 is connected to the first port 44a of the mixing three-way valve 44. A conduit 30n extending from a later-described recovery fluid branching point 37d of the second recovery channel 34 is connected to the second port 44b and fluid recovered from the second temperature-regulating device 70 flows therein. The mixing three-way valve 44 mixes these in a controlled mixing ratio and releases the mixture from a third port 44c.

### (3-3-2) Second recovery channel 34

The second recovery channel 34 is a pathway for recovering cooled fluid released from the second temperature-regulating device 70. The second recovery channel 34 extends from the second recovery port 14, continues via a conduit 30m, a second pump 42, a conduit 30l, the recovery fluid branching point 37d, a conduit 30k, a second check valve 49b, a conduit 30j, the fluid merge point 37a, and the conduit 30e, and arrives at the fluid inlet 22.

In other words, the second recovery channel 34 shares a portion of the components with the first recovery channel 32.

The second pump 42 also has an inverter and is capable of varying flow rate by control.

### (3-4) Hot-water conduit system

A hot-water conduit system for controlling the temperature of the hot-water apparatus 80 includes a hot-water apparatus feed channel 39a and a hot-water apparatus recovery channel 39b.

### (3-4-1) Hot-water apparatus feed channel 39a

The hot-water apparatus feed channel 39a is a pathway for feeding heated fluid to the hot-water apparatus 80. The hot-water apparatus feed channel 39a extends from the fluid outlet 21, continues via the conduit 30a, the hot-water three-way valve 43, and a conduit 30p, and arrives at the hot-water apparatus feed port 10a.

In other words, the hot-water apparatus feed channel 39a shares a portion of the components with the first feed channel 31.

When the mode for actuating the hot-water apparatus 80 is selected, the hot-water three-way valve 43 places the first port 43a and the third port 43c in communication with each other, and disjoins the second port 43b.

### (3-4-2) Hot-water apparatus recovery channel 39b

The hot-water apparatus recovery channel 39b is a pathway for recovering cooled fluid released from the hot-water apparatus 80. The hot-water apparatus recovery channel 39b extends from the hot-water apparatus recovery port 10b, continues via a conduit 30q, the hot-water branching point 37c, the conduit 30h, the first pump 41, the conduit 30g, the first check valve 49a, the conduit 30f, the fluid merge point 37a, and the conduit 30e, and arrives at the fluid inlet 22.

In other words, the hot-water apparatus recovery channel 39b shares a portion of the components with the first recovery channel 32.

### (3-5) Expansion tank 45

An expansion tank 45 is provided to the conduit 30h in the first recovery channel 32. The expansion tank 45 serves to absorb an increased volume of the fluid, which flows in the fluid circuit 19 as a closed circuit, when the fluid is expanded due to increase in temperature and so on.

### (3-6) Relief valve 46

In addition to the above-described expansion tank 45, a relief valve 46 is provided to the conduit 30h at the first recovery channel 32. The relief valve 46 releases fluid to the exterior of the fluid circuit 19 when the pressure of the fluid increases and exceeds a predetermined threshold value. In other words, the relief valve 46 functions as a safety device that prevents cracks in the conduits or the like of the fluid circuit 19 when the volume of the fluid expands beyond the limit that can be accommodated in the expansion tank 45.

### (3-7) Communication tube 38

A communication tube 38 connects the conduit 30h of the first recovery channel 32 and the conduit 30m of the second recovery channel 34. The communication tube 38 induces greater pressure loss than the other conduits, and is constituted of a capillary tube having a small cross-sectional area, for example.

### (3-8) Various temperature sensors

Various temperature sensors are provided for monitoring the temperature of the fluid in some sections in the circuit. A first discharge port temperature sensor 51 measures the temperature of fluid at a first discharge port 41b for fluid discharged by the first pump 41. A second discharge port temperature sensor 52 measures the temperature of fluid at a second discharge port 42b for fluid discharged by the second pump 42. A heat-exchanger fluid inlet temperature sensor 53 measures the temperature of fluid just before the fluid inlet 22. A heat-exchanger fluid outlet temperature sensor 54 measures the temperature of fluid immediately just after the fluid outlet 21. The mixed fluid temperature sensor 55 measures the temperature of fluid between the mixing three-way valve 44 and the second feed port 13.

### (3-9) Controller 200

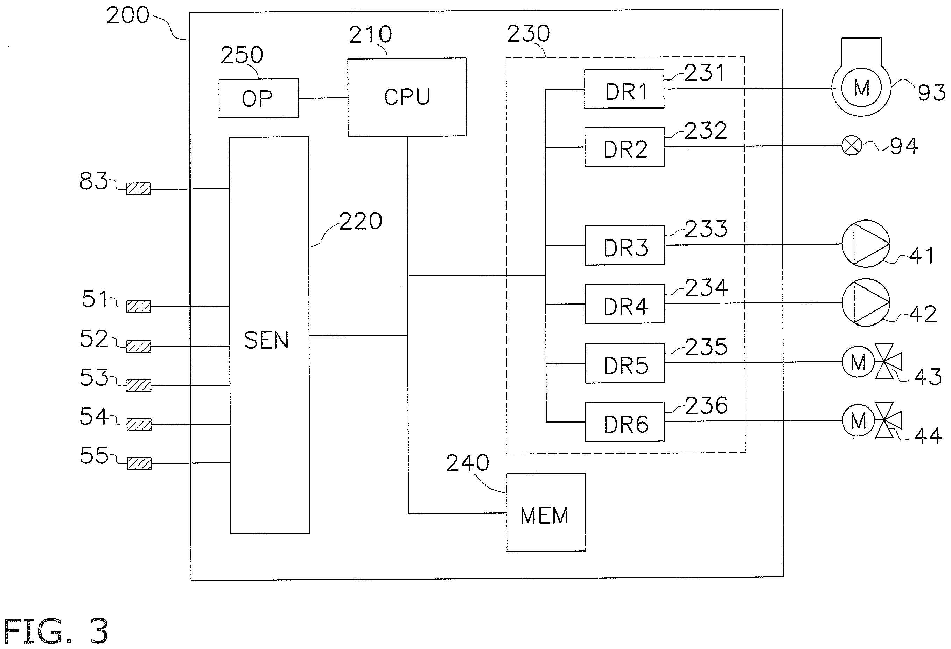

FIG. 3 is a block diagram of a controller 200 provided to the fluid-type temperature-regulating unit 10. The controller 200 is configured so as to control not only the sensors and/or actuators of the fluid-type temperature-regulating unit 10, but also the refrigerant circuit unit 90 and the hot-water apparatus 80 (FIG. 1). Each section of the controller 200 may be disposed at any location in the environment-regulating system 100 (FIG. 1).

The controller 200 has a central processing unit 210, a sensor controller 220, an actuator controller 230, a memory section 240, and an operation panel 250. The central processing unit 210 directs the processes of the devices. The sensor controller 220 acquires measurement values from the various sensors in the fluid-type temperature-regulating unit 10, and a hot-water apparatus temperature sensor 83 of the hot-water apparatus 80, and performs A/D conversion to allow the central processing unit 210 to read the values. The actuator controller 230 controls the various actuators, and has a compressor motor controller 231, a decompressor controller 232, a first pump controller 233, a second pump controller 234, a hot-water three-way valve controller 235, and a mixing three-way valve controller 236. The memory section 240 stores programs and data. The operation panel 250 receives settings input from a user and displays various statuses of the environment-regulating system 100.

### (4) Actuation

Expansion of the fluid in a closed circuit due to temperature rise may cause increase in pressure inside the circuit and therefore damage to conduits. When such an expansion of fluid occurs in the first conduit system, the volume increase of the fluid enters the expansion tank 45 provided to the first recovery channel 32. Therefore, the likelihood of damage to the conduits can be reduced.

When volume expansion occurs in the second conduit system, the volume increase of the fluid first enters from the second recovery channel 34 into the communication tube 38, subsequently moves to the first recovery channel 32, and thereafter enters the expansion tank 45.

Since the communication tube 38 induces greater pressure loss than other conduits, a very small amount of fluid passes through the communication tube 38 when the fluid-type temperature-regulating unit 10 is in a normal state. Therefore, the communication tube 38 is unlikely to inhibit the function of the first and second conduit systems.

### (5) Characteristics

### (5-1)

The communication tube 38 places the second recovery channel 34 in communication with the expansion tank 45. Therefore, when the fluid flowing through the conduit connected to the second temperature-regulating device 70 expands, the volume increase of the fluid can be moved to the expansion tank 45 by way of the communication tube 38. A mechanism for accommodating the increase in volume of the fluid in the conduit in communication with the second temperature-regulating device 70 can be configured at low cost with the communication tube 38.

### (5-2)

The communication tube 38 has a small cross-sectional area. Therefore, the high pressure loss to be induced by the communication tube 38 is achieved with the small cross-sectional area.

### (5-3)

The expansion tank 45 and the communication tube 38 are provided to the recovery-tube side for returning the fluid from a temperature-regulating device to the heat exchanger 20. The fluids mixed by the presence of the communication tube 38 are fluids each recovered from the first temperature-regulating device 60 and the second temperature- regulating device 70, the hot-heat carried by which has already been exploited. Therefore, the performance of the fluid-type temperature-regulating unit 10 is less liable to be reduced.

### (5-4)

The expansion tank 45 is provided at a location in communication with the first intake port 41a for the first pump to draw in the fluid. Therefore, in contrast to a configuration in which the expansion tank 45 is in communication with the first discharge port 41b, the fluid discharged from the first pump 41 can be restrained from being directly sent to the expansion tank 45.

### (5-5)

The communication tube 38 connects the conduit in communication with the first intake port 41a and the conduit in communication with the second intake port 42a, which is used by the second pump to draw in fluid. Therefore, the volume increase of the fluid that flows through the second recovery channel 34 can move via the communication tube 38 to the expansion tank 45, which is in communication with the first intake port 41a.

### (5-6)

A relief valve 46 is provided in communication with the expansion tank 45. Therefore, the relief valve 46 expels the fluid to the exterior of the fluid circuit 19 and thereby restrains damage to the conduits of the fluid circuit 19 in the case of abnormal situation, such as when the expansion tank 45 is full.

### (5-7)

The fluid fed from the second feed port 13 is a mixture of the fluid endowed with hot-heat from the refrigerant in the heat exchanger 20 and the fluid from which hot-heat has been taken in the second temperature-regulating device 70. Therefore, the temperature of the fluid fed to the second temperature-regulating device 70 can be set so as to be different from the temperature of the fluid fed to the first temperature-regulating device 60.

### (6) Modifications

### (6-1) Types of the first pump 41 and the second pump 42

In the embodiment described above, the first pump 41 and the second pump 42 are capable of varying the flow rate. In lieu thereof, one of the first pump 41 and the second pump 42 may have a fixed flow rate. The cost of the fluid-type temperature-regulating unit 10 can be reduced in such a case.

### (6-2) Types of devices to be controlled

In the embodiment described above, the first temperature-regulating device 60 and the second temperature-regulating device 70 are a radiator and a floor-warming apparatus, respectively. In lieu thereof, these devices may be a panel-type radiator heater, a fan convector, or other device.

### (6-3) Function of the refrigerant circuit unit 90

In the embodiment described above, the refrigerant circuit unit 90 has only a function for providing hot-heat to a fluid. In lieu thereof, the refrigerant circuit unit 90 may furthermore have a function for feeding cold-heat to the fluid. In such a case, the temperature-regulating device for cooling an objective may be connected to the fluid-type temperature-regulating unit 10 and used.

### <Second embodiment>

### (1) Overall configuration

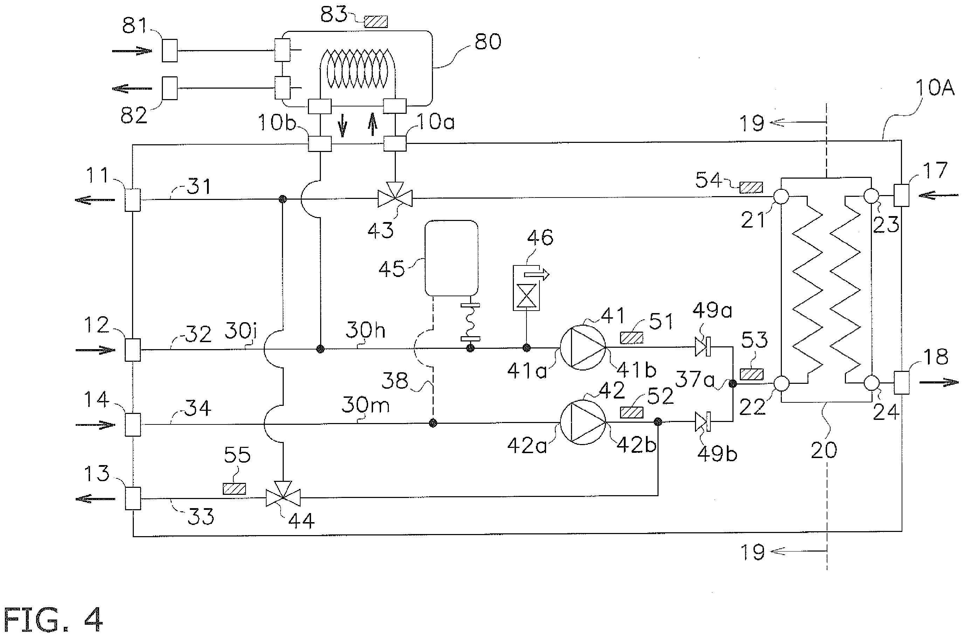

FIG. 4 shows a fluid-type temperature-regulating unit 10A according to a second embodiment of the present invention. The fluid-type temperature-regulating unit 10A is different from the first embodiment in that the communication tube 38 directly connects the conduit 30h of the second recovery channel 34 to the expansion tank 45.

### (2) Characteristics

The communication tube 38 directly connects the conduit in communication with the second intake port 42a to the expansion tank 45. Therefore, the volume increase of the fluid that flows through the second recovery channel 34 can pass through the communication tube 38 and directly enter the expansion tank 45.

### (3) Modifications

Modifications of the first embodiment may be applied to the present embodiment.

### <Third embodiment>

### (1) Overall configuration

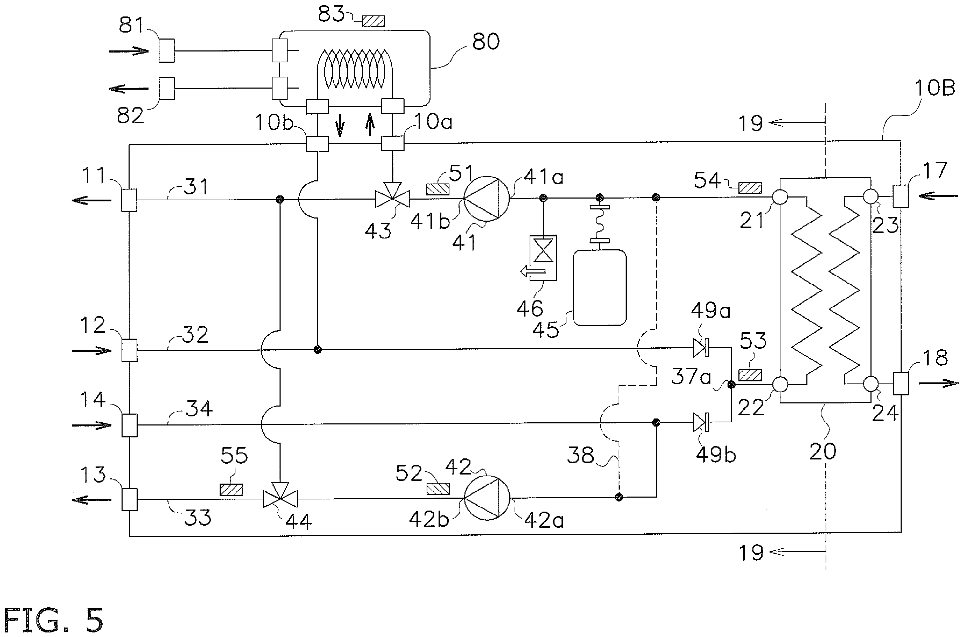

FIG. 5 shows a fluid-type temperature-regulating unit 10B according to a third embodiment of the present invention. The fluid-type temperature-regulating unit 10B is different from the first embodiment in that the first pump 41 is provided to the first feed channel 31, and the second pump 42 is provided to the second feed channel 33. The expansion tank 45 and the relief valve 46 are provided to the first feed channel 31 so as to be in communication with the first intake port 41a of the first pump 41. The communication tube 38 places the first intake port 41a of the first pump 41 and the second intake port 42a of the second pump 42 in communication with each other.

### (2) Characteristics

The communication tube 38 places the second feed channel 33 in communication with the expansion tank 45. Therefore, when the fluid flowing through the conduit connected to the second temperature-regulating device 70 expands, the volume increase of the fluid can pass through the second feed channel 33 or the second recovery channel 34, subsequently pass through the communication tube 38, and then move to the expansion tank 45. A mechanism for accommodating the increase in volume of the fluid in the conduit in communication with the second temperature-regulating device 70 can be configured at low cost with the communication tube 38.

### (3) Modifications

Modifications of the first embodiment may be applied to the present embodiment.

### <Fourth embodiment>

### (1) Overall configuration

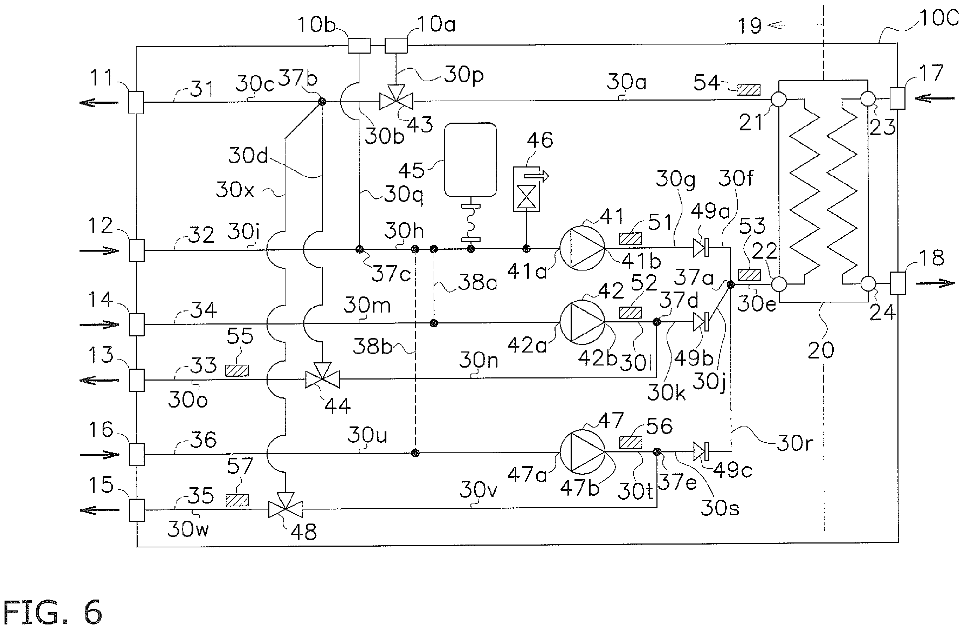

FIG. 6 shows a fluid-type temperature-regulating unit 10C according to a fourth embodiment of the present invention. The fluid-type temperature-regulating unit 10C is different from the first embodiment in having a third conduit system for controlling the temperature of a third temperature-regulating device, which is not unillustrated, in addition to the first conduit system for controlling the temperature of the first temperature-regulating device 60 and the second conduit system for controlling the temperature of the second temperature-regulating device 70.

### (2) Detailed configuration

### (2-1) Third conduit system

The third conduit system includes a third feed channel 35 and a third recovery channel 36.

### (2-1-1) Third feed channel 35

The third feed channel 35 is a pathway for feeding heated fluid to the third temperature-regulating device. The third feed channel 35 extends from the fluid outlet 21, continues through the conduit 30a, the hot-water three-way valve 43, the conduit 30b, the heated-fluid branching point 37b, a conduit 30x, the mixing three-way valve 48, and a conduit 30w, and arrives at a third feed port 15.

In other words, the third feed channel 35 shares a portion of the components with the first feed channel 31.

A conduit 30v extending from a recovery fluid branching point 37e of the third recovery channel 36 is also connected to the mixing three-way valve 48. A mixed-fluid temperature sensor 57 measures the temperature of the fluid between the mixing three-way valve 48 and the third feed port 15.

### (2-1-2) Third recovery channel 36

The third recovery channel 36 is a pathway for recovering the cooled fluid released from the third temperature-regulating device. The third recovery channel 36 extends from a third recovery port 16, a conduit 30u, a third pump 47, a conduit 30t, the recovery fluid branching point 37e, a conduit 30s, a third check valve 49c, a conduit 30r, the fluid merge point 37a, and the conduit 30e, and arrives at the fluid inlet 22.

In other words, the third recovery channel 36 shares a portion of the components with the first recovery channel 32 and the second recovery channel 34.

A third discharge port temperature sensor 56 measures the temperature of the fluid at a third discharge port 47b for the third pump 47 to discharge fluid.

### (2-2) Communication tube 38a and communication tube 38b

The fluid-type temperature-regulating unit 10C has two communication tubes. The communication tube 38a connects the conduit 30h of the first recovery channel 32 and the conduit 30m of the second recovery channel 34. The communication tube 38b connects the conduit 30h of the first recovery channel 32 and the conduit 30u of the third recovery channel 36.

The communication tube 38a and the communication tube 38b both induce a greater pressure loss than other conduits, and is constituted of a capillary tube having a small surface area, for example.

### (3) Characteristics

The fluid-type temperature-regulating unit 10 has three conduit systems. Therefore, the temperature of three temperature-regulating devices can be individually controlled.

### (4) Modifications

Modifications of the first embodiment may be applied to the present embodiment.

### REFERENCE SIGNS LIST

- 10: Fluid-type temperature-regulating unit
- 11: First feed port
- 12: First recovery port
- 13: Second feed port
- 14: Second recovery port
- 15: Third feed port
- 16: Third recovery port
- 17: Refrigerant inlet port
- 18: Refrigerant outlet port
- 19: Fluid circuit
- 20: Heat exchanger
- 21: Heat-exchanger fluid outlet
- 22: Heat-exchanger fluid inlet
- 23: Heat-exchanger refrigerant inlet
- 24: Heat-exchanger refrigerant outlet
- 31: First feed channel
- 32: First recovery channel
- 33: Second feed channel
- 34: Second recovery channel
- 35: Third feed channel
- 36: Third recovery channel
- 38: Communication tube
- 41: First pump
- 41a: First intake port
- 41b: First discharge port
- 42: Second pump
- 42a: Second intake port
- 42b: Second discharge port
- 44: Mixing three-way valve
- 45: Expansion tank
- 46: Relief valve
- 47: Third pump
- 47a: Third intake port
- 47b: Third discharge port
- 48: Mixing three-way valve
- 60: First temperature-regulating device
- 70: Second temperature-regulating device
- 80: Hot-water apparatus
- 90: Refrigerant circuit unit
- 100: Environment-regulating system

### CITATION LIST

### PATENT LITERATURE

- Patent Literature 1:: International Publication Gazette WO 2011/129248

## Claims

1. A fluid-type temperature-regulating unit (10) comprising:
a heat exchanger (20) configured to impart cold-heat or hot-heat from a refrigerant to a fluid;
a first feed port (11) configured to feed the fluid to a first temperature-regulating device (60);
a first feed channel (31) connecting the heat exchanger and the first feed port;
a first recovery port (12) configured to recover the fluid from the first temperature-regulating device;
a first recovery channel (32) connecting the heat exchanger and the first recovery port;
a first pump (41) provided to the first feed channel or the first recovery channel and configured to draw in the fluid from a first intake port (41a) and discharge the fluid from a first discharge port (41b);
an expansion tank (45) provided to the first feed channel or the first recovery channel;
a second feed port (13) configured to feed the fluid to a second temperature-regulating device (70);
a second feed channel (33) connecting the heat-exchanger and the second feed port;
a second recovery port (14) configured to recover the fluid from the second temperature-regulating device;
a second recovery channel (34) connecting the heat-exchanger and the second recovery port; and
a communication tube (38) configured to direct a portion of the fluid flowing through the second feed channel or the second recovery channel to the expansion tank,
wherein
the expansion tank is provided so as to be in communication with the first intake port,
**characterized in that**:
the fluid-type temperature-regulating unit further comprises
a second pump (42) provided to the second feed channel or the second recovery channel and configured to draw in the fluid from a second intake port (42a) and discharge the fluid from a second discharge port (42b);
the communication tube connects a first-intake-port side and a second-intake-port side, the first-intake-port side belonging to a channel which is either one of the first feed channel or the first recovery channel and to which the first pump is provided, the second-intake-port side belonging to another channel which is either one of the second feed channel or the second recovering channel and to which the second pump is provided; and
the communication tube is configured to induce greater pressure loss than any of the first feed channel, the first recovery channel, the second feed channel, and the second recovery channel.

2. The fluid-type temperature-regulating unit according to claim 1, wherein
the communication tube has a smaller cross-sectional area than the first feed channel, the first recovery channel, the second feed channel, and the second recovery channel.

3. The fluid-type temperature-regulating unit according to claim 1 or 2, wherein
the first pump is provided to the first recovery channel;
the expansion tank is provided to the first recovery channel, and
the second pump is provided to the second recovery channel.

4. The fluid-type temperature-regulating unit according to any one of claims 1 to 3, wherein
the communication tube connects the expansion tank and the second-intake-port side, the second-intake-port side belonging to a channel which is either one of the second feed channel or the second recovery channel and to which the second pump is provided.

5. The fluid-type temperature-regulating unit according to any one of claims 1 to 4, further comprising:
a relief valve (46) that is in communication with the expansion tank,
wherein the relief valve is configured to release the fluid when the pressure of the fluid flowing through a channel which is either one of the first feed channel or the first recovery channel and to which the expansion tank is provided exceeds a predetermined threshold value.

6. The fluid-type temperature-regulating unit according to any one of claims 1 to 5, further comprising:
a mixing three-way valve (44) provided to the second feed channel and configured to send to the second feed port a mixture of a portion of the fluid heading from the heat exchanger toward the first feed port and the fluid discharged from the second discharge port.

7. The fluid-type temperature-regulating unit according to any one of claims 1 to 6, further comprising:
a third feed port (15) configured to feed the fluid to a third temperature-regulating device;
a third feed channel (35) connecting the heat exchanger and the third feed port;
a third recovery port (16) configured to recover the refrigerant from the third temperature-regulating device;
a third recovery channel (36) connecting the heat exchanger and the third recovery port; and
a third pump (47) provided to the third feed channel or the third recovery channel and configured to draw in the fluid from a third intake port (47a) and discharge the fluid from a third discharge port (47b),
the communication tube being configured to direct a portion of the fluid flowing through the third feed channel or the third recovery channel to the expansion tank.

## Patentansprüche

1. Fluid-Temperaturregeleinheit (10) mit:
einem Wärmetauscher (20), der konfiguriert ist, kalte Wärme oder heiße Wärme von einem Kältemittel auf ein Fluid zu übermitteln;
einem ersten Zufuhranschluss (11), der konfiguriert ist, das Fluid einer ersten Temperaturregelvorrichtung (60) zuzuführen;
einem ersten Zufuhrkanal (31), der den Wärmetauscher und den ersten Zufuhranschluss verbindet;
einen ersten Rückgewinnungsanschluss (12), der konfiguriert ist, das Fluid aus der ersten Temperaturregelvorrichtung zurückzugewinnen;
einem ersten Rückgewinnungskanal (32), der den Wärmetauscher und den ersten Rückgewinnungsanschluss verbindet;
einer ersten Pumpe (41), die für den ersten Zufuhrkanal oder den ersten Rückgewinnungskanal vorgesehen und konfiguriert ist, das Fluid aus einem ersten Einlassanschluss (41a) anzusaugen und das Fluid aus einem ersten Ausstoßanschluss (41b) auszustoßen;
einem Expansionstank (45), der für den ersten Zufuhrkanal oder den ersten Rückgewinnungskanal vorgesehen ist;
einem zweiten Zufuhranschluss (13), der konfiguriert ist, das Fluid einer zweiten Temperaturregelvorrichtung (70) zuzuführen;
einem zweiten Zufuhrkanal (33), der den Wärmetauscher und den zweiten Zufuhranschluss verbindet;
einem zweiten Rückgewinnungsanschluss (14), der konfiguriert ist, das Fluid aus der zweiten Temperaturregelvorrichtung zurückzugewinnen;
einem zweiten Rückgewinnungskanal (34), der den Wärmetauscher und den zweiten Rückgewinnungsanschluss verbindet; und
einer Verbindungsröhre (38), die konfiguriert ist, einen Anteil des Fluids, das durch den zweiten Zufuhrkanal oder den zweiten Rückgewinnungskanal fließt, zum Expansionstank zu leiten,
wobei
der Expansionstank so vorgesehen ist, dass er mit dem ersten Einlassanschluss in Verbindung steht,
**dadurch gekennzeichnet, dass**:
die Fluid-Temperaturregeleinheit ferner aufweist:
eine zweite Pumpe (42), die für den zweiten Zufuhrkanal oder den zweiten Rückgewinnungskanal vorgesehen und konfiguriert ist, das Fluid aus einem zweiten Einlassanschluss (42a) anzusaugen und das Fluid aus einem zweiten Ausstoßanschluss (42b) auszustoßen;
die Verbindungsröhre eine Seite des ersten Einlassanschlusses und eine Seite des zweiten Einlassanschlusses verbindet, wobei die Seite des ersten Einlassanschlusses zu einem Kanal gehört, der einer des ersten Zufuhrkanals oder des ersten Rückgewinnungskanals ist und für den die erste Pumpe vorgesehen ist, wobei die Seite des zweiten Einlassanschlusses zu einem anderen Kanal gehört, der einer des zweiten Zufuhrkanals oder des zweiten Rückgewinnungskanals ist, und für den die zweite Pumpe vorgesehen ist; und
die Verbindungsröhre konfiguriert ist, einen größeren Druckverlust als irgendeiner des ersten Zufuhrkanals, des ersten Rückgewinnungskanals, des zweiten Zufuhrkanals und des zweiten Rückgewinnungskanals zu verursachen.

2. Fluid-Temperaturregeleinheit nach Anspruch 1, wobei
die Verbindungsröhre eine kleinere Querschnittfläche als der erste Zufuhrkanal, der erste Rückgewinnungskanal, der zweite Zufuhrkanal und der zweite Rückgewinnungskanal aufweist.

3. Fluid-Temperaturregeleinheit nach Anspruch 1 oder 2, wobei
die erste Pumpe für den ersten Rückgewinnungskanal vorgesehen ist;
der Expansionstank für den ersten Rückgewinnungskanal vorgesehen ist und
die zweite Pumpe für den zweiten Rückgewinnungskanal vorgesehen ist.

4. Fluid-Temperaturregeleinheit nach einem der Ansprüche 1 bis 3, wobei
die Verbindungsröhre den Expansionstank und die Seite des zweiten Einlassanschlusses verbindet, wobei die Seite des zweiten Einlassanschlusses zu einem Kanal gehört, der einer des zweiten Zufuhrkanals oder des zweiten Rückgewinnungskanals ist und für den die zweite Pumpe vorgesehen ist.

5. Fluid-Temperaturregeleinheit nach einem der Ansprüche 1 bis 4, die ferner aufweist:
ein Entlastungsventil (46), das mit dem Expansionstank in Verbindung steht,
wobei das Entlastungsventil konfiguriert ist, das Fluid zu entlasten, wenn der Druck des Fluids, das durch einen Kanal fließt, der einer des ersten Zufuhrkanals oder des ersten Rückgewinnungskanals ist und für den der Expansionstank vorgesehen ist, einen vorgegebenen Schwellenwert überschreitet.

6. Fluid-Temperaturregeleinheit nach einem der Ansprüche 1 bis 5, die ferner aufweist:
ein Dreiwegemischventil (44), das für den zweiten Zufuhrkanal vorgesehen und konfiguriert ist, zum zweiten Zufuhranschluss eine Mischung eines Anteils des Fluids, das vom Wärmetauscher zum ersten Zufuhranschluss geht, und des Fluids zu schicken, das aus dem zweiten Ausstoßanschluss auszustoßen wird.

7. Fluid-Temperaturregeleinheit nach einem der Ansprüche 1 bis 6, die ferner aufweist:
einen dritten Zufuhranschluss (15), der konfiguriert ist, das Fluid einer dritten Temperaturregelvorrichtung zuzuführen;
einen dritten Zufuhrkanal (35), der den Wärmetauscher und den dritten Zufuhranschluss verbindet;
einen dritten Rückgewinnungsanschluss (16), der konfiguriert ist, das Kältemittel aus der dritten Temperaturregelvorrichtung zurückzugewinnen;
einen dritten Rückgewinnungskanal (36), der den Wärmetauscher und den dritten Rückgewinnungsanschluss verbindet; und
eine dritte Pumpe (47), die für den dritten Zufuhrkanal oder den dritten Rückgewinnungskanal vorgesehen und konfiguriert ist, das Fluid aus einem dritten Einlassanschluss (47a) anzusaugen und das Fluid aus einem dritten Ausstoßanschluss (47b) auszustoßen, wobei die Verbindungsröhre konfiguriert ist, einen Anteil des Fluids, das durch den dritten Zufuhrkanal oder den dritten Rückgewinnungskanal fließt, zum Expansionstank zu leiten.

## Revendications

1. Unité de régulation de température de type fluidique (10), comprenant :
un échangeur de chaleur (20) prévu pour effectuer un transfert de chaleur froide ou de chaleur chaude d'un réfrigérant à un fluide ;
un premier orifice d'alimentation (11) prévu pour le refoulement du fluide vers un premier dispositif de régulation de température (60) ;
un premier canal d'alimentation (31) reliant l'échangeur de chaleur au premier orifice d'alimentation ;
un premier orifice de récupération (12) prévu pour récupérer le fluide du premier dispositif de régulation de température ;
un premier canal de récupération (32) reliant l'échangeur de chaleur au premier orifice de récupération ;
une première pompe (41) prévue sur le premier canal d'alimentation ou le premier canal de récupération et destinée à aspirer le fluide d'un premier orifice d'admission (41a) et à évacuer le fluide d'un premier orifice d'évacuation (41b) ;
un réservoir de détente (45) prévu sur le premier canal d'alimentation ou le premier canal de récupération ;
un deuxième orifice d'alimentation (13) prévu pour le refoulement du fluide vers un deuxième dispositif de régulation de température (70) ;
un deuxième canal d'alimentation (33) reliant l'échangeur de chaleur au deuxième orifice d'alimentation ;
un deuxième orifice de récupération (14) prévu pour récupérer le fluide du deuxième dispositif de régulation de température ;
un deuxième canal de récupération (34) reliant l'échangeur de chaleur au deuxième orifice de récupération ; et
un tuyau de communication (38) prévu pour conduire une partie du fluide s'écoulant dans le deuxième canal d'alimentation ou le deuxième canal de récupération vers le réservoir de détente,
le réservoir de détente étant prévu pour être en communication avec le premier orifice d'admission,
**caractérisée en ce que** :
ladite unité de régulation de température de type fluidique comprend en outre
une deuxième pompe (42) prévue sur le deuxième canal d'alimentation ou le deuxième canal de récupération et destinée à aspirer le fluide d'un deuxième orifice d'admission (42a) et à évacuer le fluide d'un deuxième orifice d'évacuation (42b) ;
le tuyau de communication relie le côté du premier orifice d'admission au côté du deuxième orifice d'admission, le côté du premier orifice d'admission faisant partie d'un canal qui est soit le premier canal d'alimentation soit le premier canal de récupération, et sur lequel la première pompe est prévue, le côté du deuxième orifice d'admission faisant partie d'un autre canal qui est soit le deuxième canal d'alimentation soit le deuxième canal de récupération, et sur lequel la deuxième pompe est prévue ; et
le tuyau de communication est prévu pour induire une perte de pression supérieure à n'importe lequel du premier canal d'alimentation, du premier canal de récupération, du deuxième canal d'alimentation et du deuxième canal de récupération.

2. Unité de régulation de température de type fluidique selon la revendication 1, où
le tuyau de communication a une surface de section transversale inférieure à celle du premier canal d'alimentation, du premier canal de récupération, du deuxième canal d'alimentation et du deuxième canal de récupération.

3. Unité de régulation de température de type fluidique selon la revendication 1 ou la revendication 2, où la première pompe est prévue sur le premier canal de récupération ;
le réservoir de détente est prévu sur le premier canal de récupération, et
la deuxième pompe est prévue sur le deuxième canal de récupération.

4. Unité de régulation de température de type fluidique selon l'une des revendications 1 à 3, où
le tuyau de communication relie le réservoir de détente au côté du deuxième orifice d'admission, le côté du deuxième orifice d'admission faisant partie d'un canal qui est soit le deuxième canal d'alimentation soit le deuxième canal de récupération, et sur lequel la deuxième pompe est prévue.

5. Unité de régulation de température de type fluidique selon l'une des revendications 1 à 4, comprenant en outre :
une vanne de surpression (46) en communication avec le réservoir de détente,
ladite vanne de surpression étant prévue pour libérer le fluide quand la pression du fluide s'écoulant dans un canal qui est soit le premier canal d'alimentation soit le premier canal de récupération, et sur lequel le réservoir de détente est prévu, dépasse une valeur limite définie.

6. Unité de régulation de température de type fluidique selon l'une des revendications 1 à 5, comprenant en outre :
une vanne de mélange à trois voies (44) prévue sur le deuxième canal d'alimentation et destinée à diriger vers le deuxième orifice d'alimentation un mélange d'une partie du fluide sortant de l'échangeur de chaleur en direction du premier orifice d'alimentation et du fluide évacué du deuxième orifice d'évacuation.

7. Unité de régulation de température de type fluidique selon l'une des revendications 1 à 6, comprenant en outre :
un troisième orifice d'alimentation (15) prévu pour le refoulement du fluide vers un troisième dispositif de régulation de température ;
un troisième canal d'alimentation (35) reliant l'échangeur de chaleur au troisième orifice d'alimentation ;
un troisième orifice de récupération (16) prévu pour récupérer le réfrigérant du troisième dispositif de régulation de température ;
un troisième canal de récupération (36) reliant l'échangeur de chaleur au troisième orifice de récupération ; et
une troisième pompe (47) prévue sur le troisième canal d'alimentation ou le troisième canal de récupération et destinée à aspirer le fluide d'un troisième orifice d'admission (47a) et à évacuer le fluide d'un troisième orifice d'évacuation (47b),
le tuyau de communication étant prévu pour conduire une partie du fluide s'écoulant dans le troisième canal d'alimentation ou le troisième canal de récupération vers le réservoir de détente.
